# EUROPÄISCHE PATENTSCHRIFT

(11) **EP 2 086 098 B1**
(45) Veröffentlichungstag und Bekanntmachung des Hinweises auf die Patenterteilung: **10.10.2012**
(21) Anmeldenummer: 08150868.1
(22) Anmeldetag: 31.01.2008
(51) Int. Cl.: H02M 3/335, H02J 1/10

(54) **Schaltnetzteil mit einer Vorrichtung zum Parallelbetrieb derartiger Schaltnetzteile**
Switching power supply with an apparatus for parallel operation of such switching power supplies
Circuit de commande d'alimentation à découpage avec un dispositif pour le fonctionnement en parallèle de tels circuits

(43) Veröffentlichungstag der Anmeldung: 05.08.2009
(73) Patentinhaber: BLOCK Transformatoren-Elektronik GmbH, 27283 Verden (DE)
(72) Erfinder: Leipscher, Peter, 28816, Stuhr (DE)
(74) Vertreter: Eisenführ, Speiser & Partner

(56) Entgegenhaltungen:
- JP-A- 1 303 054
- JP-A- 61 116 969

## Beschreibung

Die vorliegende Erfindung betrifft ein Schaltnetzteil zum Bereitstellen einer geregelten Ausgangsspannung. Weiterhin betrifft diese Erfindung eine Spannungsquelle zum Bereitstellen einer geregelten Ausgangsspannung mit wenigstens zwei Schaltnetzteilen. Die Erfindung betrifft ferner ein Verfahren zum Betreiben eines Schaltnetzteils zum Bereitstellen einer geregelten Ausgangsspannung.

Schaltnetzteile zum Bereitstellen einer geregelten Ausgangsspannung sind allgemein bekannt. Solche Schaltnetzteile weisen einen Wandlertransformator mit einer Primär- und einer Sekundärseite auf. An der Primärseite wird eine gepulste Primärspannung eingegeben. Die resultierende Sekundärspannung an der Sekundärseite wird gleichgerichtet und an einem Glättungskondensator angelegt, der somit im Wesentlichen eine Gleichspannung bereitstellt. Diese Gleichspannung bildet üblicherweise die Ausgangsspannung des Schaltnetzteils und kann entsprechend von einem angeschlossenen Verbraucher genutzt werden.

Über die Pulsbreite der gepulsten Primärspannung kann die Ausgangsspannung bzw. der Ausgangsstrom gesteuert werden. Üblicherweise ist Ziel, die Ausgangsspannung konstant zu halten. Bedingt beispielsweise eine höhere Leistungsaufnahme des Verbrauchers einen Spannungsabfall der Ausgangsspannung, so wird die Pulsbreite, insbesondere das Pulspausenverhältnis der gepulsten Primärspannung erhöht um mehr Strom am Ausgang des Schaltnetzteils bereitzustellen und dadurch die Ausgangsspannung zu stabilisieren.

Ebenso wird die Pulsbreite der gepulsten Primärspannung verringert, wenn die Ausgangsspannung - insbesondere bedingt durch eine verringerte Leistungsaufnahme des angeschlossenen Verbrauchers - über einen gewünschten Wert ansteigt. Der Strom wird hierdurch verringert und die Ausgangsspannung kann wieder abfallen.

Problematisch kann eine solche Spannungsregelung werden, wenn mehrere Schaltnetzteile parallel geschaltet werden. Die Parallelschaltung erfolgt üblicherweise um einen höheren Ausgangsstrom bereitzustellen. Beispielsweise kann ein Strom von etwa 10 Ampere bereitgestellt werden, wenn drei im Wesentlichen gleiche Schaltnetzteile parallel geschaltet werden, die jeweils etwa 3,3 Ampere liefern können. Wenn beispielsweise der Verbraucher eine verringerte Leistung benötigt und abnimmt, die beispielsweise 6 statt 10 Ampere beträgt, sollten alle drei Schaltnetzteile jeweils im Wesentlichen 2 Ampere liefern. Dabei kann es vorkommen, dass durch Bauungenauigkeiten oder leicht variierender Abgleich der einzelnen Schaltnetzteile oder dergleichen beispielsweise ein Schaltnetzteil zuerst die Abregelung, nämlich die Verringerung der Pulsbreite zur Reduzierung des Stromes einleitet. Dies erfolgt beispielsweise dann, wenn durch die beschriebenen Abweichungen die auszuregelnde Referenzspannung dieses ersten Schaltnetzteils etwas geringer liegt als bei den anderen beiden Schaltnetzteilen. Durch die reduzierte Leitungsabnahme steigt dann die Ausgangsspannung an und überschreitet zuerst diese leicht reduzierte Referenzspannung. Das erste Schaltnetzteil regelt herunter und verhindert zunächst ein weiteres Ansteigen der Ausgangsspannung, die aufgrund der Parallelschaltung bei allen Schaltnetzteilen gleich ist.

Weil bei den anderen beispielhaft genannten Schaltnetzteilen deren Referenzspannung jeweils noch nicht überschritten ist, regeln diese auch nicht oder zumindest zu einem wesentlich geringeren Umfang herunter. Dies kann soweit führen, dass das beispielhaft erste genannte Schaltnetzteil die Pulsbreite fast bis auf Null reduziert und praktisch keinen Strom mehr liefert, so dass in dem genannten Beispiel die anderen beiden Schaltnetzteile jeweils 3 Ampere zum Erreichen der 6 Ampere liefern.

Neben der hierbei auftretenden ungleichmäßigen Belastung kommt oftmals erschwerend hinzu, dass das Schaltnetzteil, das praktisch keinen Strom mehr liefert, in einen Spar- oder Stand-By-Modus geht, oder sogar ganz abschaltet.

Ein vollständiges Abschalten bzw. in Stand-By-Modus gehen eines Schaltnetzteils ist grundsätzlich erwünscht, da dies üblicherweise dann erfolgt, wenn auch der Verbraucher ausgeschaltet ist und keinen Strom mehr aufnimmt. Im vorliegenden Beispiel ist dies jedoch nicht der Fall und der Verbraucher dürfte mit seiner Stromaufnahme von 6 Ampere statt maximal 10 Ampere in einem normalen Arbeitsmodus sein. In diesem Modus kann er plötzlich mehr Strom wie z. B. 9 Ampere anfordern, den die beiden noch laufenden Schaltnetzteile aber nicht liefern können. Das ausgeschaltete bzw. im Stand-By-Modus befindliche Schaltnetzteil könnte den fehlenden Strom liefern, benötigt aber eine Anlaufzeit hierfür, die für einen fehlerfreien Betrieb des Verbrauchers zu lang sein kann.

Für den Betrieb der Ansteuerschaltung von Schaltnetzteilen wird in der Regel eine Hilfsspannung im Bereich von etwa 8 bis 20 V Gleichspannung benötigt wird. Diese gewinnt man in den meisten Fällen durch eine zusätzliche Wicklung auf dem Wandlertransformator, der die Ausgangsspannung des Gerätes erzeugt. Dies setzt voraus, dass der Transformator mit einer Mindestpulsbreite arbeitet.

Durch die unterschiedlichen Einschaltzeiten, gesteuert durch eine Regelung, wird die Ausgangsspannung bei wechselnden Lasten am Ausgang oder bei Schwankungen der Eingangsspannung stabilisiert.

Je nach Anwendung kann es erforderlich sein, dass zwei oder mehrere Schaltnetzteile parallel geschaltet werden sollen. Das kann zur Leistungserhöhung oder zur Redundanz einer Schaltungsanordnung erfolgen.

In diesen Fällen ist es erforderlich, dass alle Netzteile genau auf die gleiche Ausgangsspannung eingestellt sind. Gibt es Unterschiede, besonders bei einer Schaltung zur Redundanz, tritt folgender Effekt ein:
Das Netzteil mit der höher eingestellten Spannung liefert diese auch an den Ausgang der anderen Geräte und damit auch auf die Spannungsregeleinrichtung dieser Geräte.

Diese kann nicht unterscheiden, ob die eigene Spannung schwankt, oder eine Fremdspannung von Außen anliegt. In jedem Fall wird die Pulsbreite zurückgeregelt. Bei einer bestimmten Spannungsdifferenz geht die Pulsbreite gegen Null und der Wandlertransformator wird nicht mehr angesteuert. Da nun auch die Hilfsspannung für die Ansteuerschaltung wegfällt, geht das Netzteil aus. Dies hat zur Folge, dass bei einem Ausfall oder überlastetem Netzteil mit der höheren Ausgangsspannung dieses bzw. die Ausgangsspannung so lange zusammenbricht, bis das andere Netzteil wieder anschaltet. Dies kann je nach Schaltungsanordnung im Bereich von Millisekunden bis zu einer Sekunde dauern.

Soll das Netzteil trotzdem weiter arbeiten, muss z. B. eine interne Grundlast vorhanden sein, die jedoch den Wirkungsgrad des Netzteils verringert.

Ebenso ist eine Entkupplung der Ausgangsspannung über Dioden an den einzelnen Ausgängen möglich. Nachteilig ist hierbei, dass zusätzliche Verluste durch Spannungsabfall an den Dioden auftreten.

Die JP01303054A betrifft ein Schaltnetzteil, bei dem eine Ausgangsspannung ein Element steuert, um die Ausgangsspannung durch einen PWM-Steuerschaltkreis 31 zu erhöhen. Aus der JP61116969 ist eine Schaltungsanordnung mit einem Transistor zum Schalten einer Spannung offenbart, bei dem die Spannung eines Ausgangs zurückgeführt und mit einer Referenzspannung von einer Referenzspannungsquelle verglichen wird, um die Möglichkeiten einer Steuerung zum Steuern des gewünschten Ausgangs zu erhöhen.

Aufgabe der vorliegenden Erfindung ist es somit, die genannten Nachteile zu vermeiden und insbesondere eine Lösung zu schaffen, bei der ein ungleichmäßiges Herunterfahren oder sogar einseitiges Abschalten eines von mehreren Schaltnetzteilen vermieden werden soll.

Zur Lösung der Aufgabe wird ein Schaltnetzteil zum Bereitstellen einer geregelten Ausgangsspannung gemäß Anspruch 1 vorgeschlagen mit einem Wandlertransformator einer Primärseite zum Eingeben einer Primärspannung und einer Sekundärseite zum Ausgeben einer Sekundärspannung, einer Regeleinrichtung zum Steuern einer Pulsbreite der Primärspannung mit einem Regelungseingang zum Eingeben einer von der Sekundärspannung abhängigen Messspannung und einem Spannungsteiler zum Erzeugen der Messspannung aus der Ausgangsspannung, wobei eine Anpassungsschaltung zum Verändern des Spannungsteilers vorgesehen ist.

Zum Steuern einer Pulsbreite der Primärspannung ist somit eine Regeleinrichtung vorgesehen. Diese weist einen Reglungseingang auf, an den eine von der Sekundärspannung abhängige Messspannung eingegeben wird. Die Messspannung wird hierfür durch einen Spannungsteiler erzeugt. Der Spannungsteiler ist zwischen einem positiven Potential der Ausgangsspannung und einem Bezugspotential wie insbesondere der Erde angeordnet. Der Spannungsteiler besteht dabei zumindest aus zwei in Reihe geschalteten Widerständen und die Messspannung wird an einem Punkt zwischen wenigstens zwei der Widerstände abgegriffen. Dabei kann einer der Widerstände veränderlich sein, wie beispielsweise bei Verwendung eines Potentiometers, um den Spannungsteiler abgleichen zu können.

Es ist nun weiter eine Anpassungsschaltung zum Verändern der Messspannung vorgesehen. Insbesondere ist die Anpassungsschaltung dazu ausgebildet, die Messspannung abhängig von der Sekundärspannung zu verändern. Hierdurch wird erreicht, dass die Messspannung am Reglungseingang und damit nicht nur von der Ausgangsspannung sondern auch von der Sekundärspannung abhängt. Entsprechend wird auch das Pulsverhältnis und der resultierende Ausgangsstrom nicht nur abhängig von der Ausgangsspannung, sondern auch von der Sekundärspannung geregelt. Dies ist insbesondere dann von Bedeutung, wenn für die Ausgangsspannung nicht nur das Schaltnetzteil eine Quelle bildet, sondern die Ausgangsspannung auch anderweitig, insbesondere durch ein oder mehrere weitere Schaltnetzteile bereitgestellt wird.

Erhöht sich bei einem solchen erfindungsgemäßen Netzteil die Ausgangsspannung, so wird sich zunächst auch die Messspannung erhöhen und die Regeleinrichtung verkleinert die Pulsbreite und der Strom an der Sekundärseite kann sich verringern. Wird die Ausgangsspannung in diesem Fall aber durch weitere Quellen zumindest teilweise stabilisiert, hat also die beschriebene Regelung des Schaltnetzteils keine oder ein verringerte Wirkung, so wird über die Sekundärspannung ein Resultat der Regelung erfasst. Konkret bedeutet dies, dass wenngleich die Ausgangsspannung gleich bleibt, weil sie anderweitig stabilisiert wird, die Sekundärspannung als Ergebnis der Regelung abfallen kann. Dies verwendet die Anpassungsschaltung und verändert die Messspannung. Diese wird nämlich für das beschriebene Beispiel dann zumindest etwas abgesenkt. Diese Absenkung ist dann für die Regeleinrichtung das Signal, entweder die Pulsbreite wieder zu erhöhen oder zumindest nicht in gleichem Maße weiter zu verringern.

Bevorzugt ist an der Sekundärseite ein erstes Gleichrichtelement zum Gleichrichten der Sekundärspannung angeschlossen und die Anpassungsschaltung ist an einem ersten Anschlusspunkt an einen Stromzweig zwischen der Sekundärseite und dem Gleichrichtelement angeschlossen. Dieses erste Gleichrichtelement, das als Diode oder Leistungsdiode ausgestaltet sein kann, richtet die Sekundärspannung gleich und leitet sie üblicherweise auf einen oder mehrere Kondensatoren, die die Gleichspannung puffern. Dieses Gleichrichtelement verhindert gleichzeitig, dass die Ausgangsspannung, insbesondere wenn sie von einem anderen Gerät als von diesem Schaltnetzteil erhöht wird, auch die Sekundärspannung erhöht. Der erste Anschlusspunkt, an dem die Anpassschaltung angeschlossen ist, wird somit von der Sekundärspannung beeinflusst, aber die Ausgangsspannung führt auf diesen Punkt nicht direkt zurück. Der Stromzweig kann allein aus einer Verbindungsleitung zwischen einem Anschluss der Sekundärseite und dem Gleichrichtelement sein.

Gemäß einer weiteren Ausführungsform weist der Spannungsteiler das Folgende auf: Einen ersten Teilungswiderstand, der zwischen dem Regelungseingang und einem Bezugspotential angeschlossen ist, einen zweiten Teilungswiderstand, der zwischen dem Regelungseingang und einem zweiten Anschlusspunkt der Anpassungsschaltung angeschlossen ist, und einen dritten Teilungswiderstand, der zwischen dem zweiten Anschlusspunkt der Anpassungsschaltung und der Ausgangsspannung angeordnet ist. Und die Anpassungsschaltung ist an dem zweiten Anschlusspunkt angeschlossen.

Demnach ist der Spannungsteiler jedenfalls in drei in Reihe geschaltete Teilungswiderstände aufgeteilt. Zwischen dem ersten und zweiten Teilungswiderstand wird die Messspannung abgegriffen, die an dem Regelungseingang anliegt. Zwischen dem zweiten und dritten Teilungswiderstand ist die Anpassungsschaltung angeschlossen, um hierdurch das Verändern der Messspannung zu erreichen. Die Messspannung hängt grundsätzlich von der Ausgangsspannung bezogen auf das Bezugspotential und dem Widerstandsverhältnis zwischen der Summe des zweiten und dritten Teilungswiderstands und dem ersten Teilungswiderstand ab. Durch den Abgriff zwischen dem zweiten und dritten Teilungswiderstand wird jedoch auf den Spannungsteiler eingegriffen, in dem insbesondere auf das Spannungspotential an dem zweiten Anschlusspunkt der Anpassungsschaltung eingewirkt wird. Dadurch wird das feste Teilungsverhältnis des Spannungsteilers veränderlich. Somit kann die Anpassungsschaltung auf diesen zweiten Anschlusspunkt einwirken, dadurch den Spannungsteiler verändern und im Ergebnis die Messspannung verändern. Weil hierdurch im Grunde der Spannungsteiler verändert wird, nicht jedoch direkt auf die Messspannung zugegriffen wird, hängt auch die Messspannung nach wie vor von der Ausgangsspannung ab. Dies ist auch erwünscht. Wird nämlich das Schaltnetzteil beispielsweise alleine betriebe, also ohne das weitere Quellen auf die Ausgangsspannung zugreifen, kann sich das Schaltnetzteil im Wesentlichen so verhalten wie ein Schaltnetzteil ohne Anpassungsschaltung. Das Schaltnetzteil kann somit nach wie vor in einer Großserienfertigung hergestellt werden, ohne Rücksicht darauf, ob es letztlich alleine oder mit weiteren Schaltnetzteilen in einer Parallelschaltung zusammen eingesetzt werden soll.

Günstig ist es, wenn die Anpassungsschaltung einen Hilfspunkt aufweist zum Bereitstellen eines Hilfspotentials. Über diesen Hilfspunkt und damit das Hilfspotential kann auf einfache Weise das Spannungspotential an dem zweiten Anschlusspunkt der Anpassungsschaltung zwischen dem zweiten und dritten Teilungswiderstand Einfluss genommen werden.

Die Anpassungsschaltung umfasst gemäß einer weiteren Ausgestaltung ein erstes Hilfsgleichrichtmittel, das zwischen dem ersten Anschlusspunkt und dem Hilfspunkt angeschlossen ist und in Bezug auf den ersten Anschlusspunkt die gleiche Gleichrichtrichtung aufweist wie das erste Gleichrichtmittel, einen Hilfskondensator zum Halten der Hilfsspannung an dem Hilfspunkt, der zwischen einem Bezugspotential oder dem Bezugspotential und dem Hilfspunkt angeschlossen ist, einen zum Kondensator parallel geschalteten Widerstand und ein zweites Hilfsgleichrichtmittel, das zwischen dem zweiten Anschlusspunkt und dem Hilfspunkt angeschlossen ist und in Bezug auf den Hilfspunkt die gleiche Gleichrichtrichtung aufweist wie das erste Hilfsgleichrichtmittel.

Somit richtet ein erstes Hilfsgleichrichtmittel, insbesondere eine Diode die Sekundärspannung gleich, so dass diese gleichgerichtete Sekundärspannung im Wesentlichen an den Hilfskondensator als Hilfsspannung bereitgestellt wird. Dieses erste Hilfsgleichrichtmittel richtet in dieselbe Richtung gleich wie das erste Gleichrichtmittel. D. h., üblicherweise fließt somit der Strom von einem Anschluss der Sekundärseite sowohl durch das erste Gleichrichtmittel in Richtung zur Ausgangsspannung und insbesondere einen dort angeordneten Pufferkondensator und der Strom fließt ebenfalls von demselben Anschlusspunkt der Sekundärseite durch das erste Hilfsgleichrichtmittel zu dem Hilfspunkt und damit in den Hilfskondensator.

Parallel zum Hilfskondensator ist ein Widerstand geschaltet, der im Wesentlichen eine Entladung des Hilfskondensators ermöglicht. Das zweite Hilfsgleichrichtmittel hat die gleiche Gleichrichtrichtung wie das erste Hilfsgleichrichtmittel, bezogen auf den Hilfspunkt. Im oben genannten Beispiel bedeutet das, dass das zweite Hilfsgleichrichtmittel Strom von dem zweiten Anschlusspunkt zum Hilfspunkt hinleitet.

Die Anpassungsschaltung schafft somit an dem Hilfspunkt ein Spannungspotential, das das Spannungspotential an dem zweiten Anschlusspunkt aufgrund der Verbindung über das zweite Hilfsgleichrichtmittel herunterziehen kann. Die umgekehrte Richtung ist wegen der Gleichrichtwirkung nicht möglich.

Wenn also in einem Beispiel die Ausgangsspannung ansteigt, steigt zunächst auch die Messspannung an und führt zu einer verringerten Pulsweite der Primärspannung. Der Wandlertransformator liefert weniger Strom. Bleibt nun die Ausgangsspannung gleichwohl konstant, weil diese auch durch eine weitere Quelle gespeist wird, so kann sich aber die Sekundärspannung bzw. die gleichgerichtete Hilfsspannung an dem Hilfspunkt reduzieren. Eine Reduzierung erfolgt dabei durch allmähliches Entladen des Hilfskondensators über den Entladewiderstand. Somit senkt sich das Spannungspotential am Hilfspunkt ab und über das zweite Gleichrichtmittel, das eine Diode sein kann, senkt sich auch das Potential des zweiten Anschlusspunktes ab. Entsprechend wird der Spannungsteiler beeinflusst und die Spannung am Regeleingang wird hierdurch ebenfalls verringert. Die Messspannung verringert sich somit, obwohl die Ausgangsspannung gleich bleibt und wirkt einem weiteren Reduzieren der Pulsbreite der Primärspannung entgegen.

Es wird ebenfalls eine Spannungsquelle zum Bereitstellen einer geregelten Ausgangsspannung vorgeschlagen, die wenigstens zwei erfindungsgemäße Schaltnetzteile aufweist. Vorzugsweise sind die Schaltnetzteile parallel geschaltet, so dass sich ihre Ausgangsströme addieren. Werden so zwei oder mehr Schaltnetzteile zusammengeschaltet, ergibt sich eine Ausgangsspannung, die aber von mehreren Schaltnetzteilen abhängt. Erhöht sich bei einer solchen Spannungsquelle die Ausgangsspannung und regelt aufgrund leichter Abweichungen zwischen den zu einer Spannungsquelle zusammengeschalteten Netzteilen zuerst seine Sekundärspannung herunter, um die Ausgangsspannung abzusenken, so kommt jedenfalls ein Aspekt der vorliegenden Erfindung zum Einsatz. Das Hilfspotential der Anpassungsschaltung dieses Schaltnetzteils verringert sich nämlich und mit ihm letztendlich die Messspannung. Dem Herunterregeln dieses Schaltnetzteils wird somit entgegen gewirkt. Sollte der Gesamtausgangsstrom der Spannungsquelle noch immer höher als der abzunehmende Strom des Verbrauchers sein, so kann sich dann die Ausgangsspannung noch ein wenig erhöhen und auch die anderen Schaltnetzteile fangen an auszuregeln.

Somit ist es günstig, in der Spannungsquelle Schaltnetzteile zusammenzuschalten, die dazu vorbereitet sind jeweils den gleichen Strom zu liefern. Durch die erfindungsgemäße Ausgestaltung der Schaltnetzteile wird erreicht, dass eine Spannungsregelung im Wesentlichen von allen in der Spannungsquelle verschalteten Schaltnetzteilen durchgeführt wird.

Erfindungsgemäß wird ein Verfahren zum Betreiben eines Schaltnetzteils zum Bereitstellen einer geregelten Ausgangsspannung vorgeschlagen, das die folgenden Verfahrensschritte umfasst:

Ansteuern eines Wandlertransformators des Schaltnetzteils mit einer gepulsten Primärspannung an einer Primärseite, so dass an einer Sekundärseite des Wandlertransformators eine Sekundärspannung ausgegeben wird, Gleichrichten der Sekundärspannung, um eine Ausgangsspannung zu erzeugen, und Einstellen einer Pulsbreite der Primärspannung mittels einer Regeleinrichtung zum Steuern der Ausgangsspannung, wobei die Pulsbreite abhängig von der Ausgangsspannung und der Sekundärspannung eingestellt wird.

Entsprechend wird der Wandlertransformator mit einer gepulsten Primärspannung an einer Primärseite angesteuert und die an der Sekundärseite entstehende Sekundärspannung wird zu einer Ausgangsspannung gleichgerichtet. Die Pulsbreite der Primärspannung wird mittels einer Regeleinrichtung zum Steuern der Ausgangsspannung eingestellt, was nicht allein abhängig von der Ausgangsspannung erfolgt, sondern auch abhängig von der Sekundärspannung. Hierfür kann zunächst eine Hilfsspannung aus der Sekundärspannung erzeugt werden, die als Referenz für die Pulsbreite zugrunde liegt. Vorzugsweise wird hierfür ein erfindungsgemäßes Schaltnetzteil eingesetzt.

Gemäß einer bevorzugten Ausführungsform ist ein Verfahren vorgesehen, bei dem eine Spannungsquelle betrieben wird, bei der mehrere Schaltnetzteile parallel geschaltet werden und zum Betreiben jedes Schaltnetzteils ein erfindungsgemäßes Verfahren eingesetzt wird. Günstig ist es, wenn zudem eine Spannungsquelle gemäß wenigstens einer Ausführungsform der vorliegenden Erfindung verwendet wird.

Nachfolgend wird die Erfindung unter Bezugnahme auf die Figuren anhand einiger Ausführungsbeispiele näher erläutert.

Es zeigen:
- Figur 1: einen Spannungsteiler zum Erzeugen einer Messspannung in einem Regelungseingang aus einer Ausgangsspannung gemäß dem Stande der Technik,
- Figur 2: die Parallelschaltung dreier Schaltnetzteile schematisch und
- Figur 3: eine Schaltungsanordnung eines erfindungsgemäßen Schaltnetzteils.

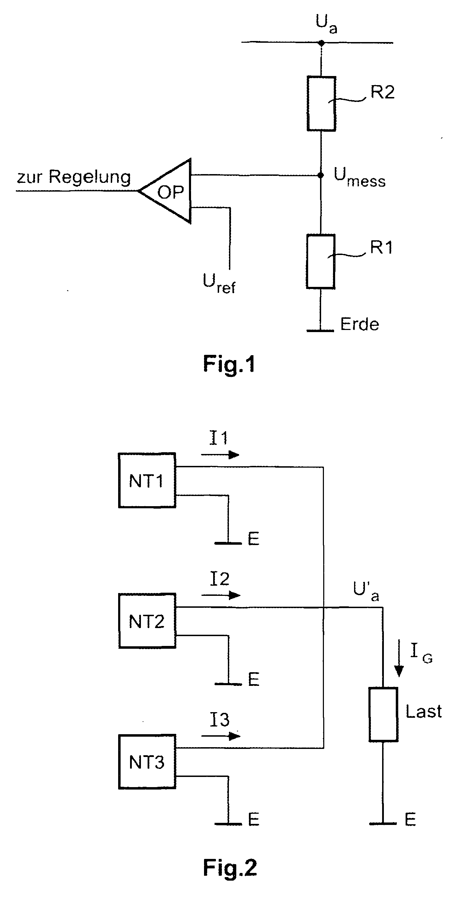

Bei Schaltnetzteilen gemäß dem Stande der Technik erfolgt eine Erfassung der Ausgangsspannung mit einer Schaltungsanordnung, wie sie in Figur 1 dargestellt ist. Diese Schaltungsanordnung bildet nur einen Ausschnitt im Wesentlichen der Ausgangsseite eines Schaltnetzteils. Das Schaltnetzteil liefert eine Ausgangsspannung Ua, die zur Erde hin anliegt.

Zur Erfassung wird ein Spannungsteiler zwischen der Ausgangsspannung Uₐ und der Erde angeordnet. Dieser besteht aus einer Reihenschaltung der Widerstände R1 und R2. Zwischen den Widerständen R1 und R2 kann die Messspannung Uₘₑₛₛ abgegriffen werden. Diese Messspannung ist proportional zur Ausgangsspannung Dₐ und der Proportionalitätsfaktor entspricht dem Verhältnis des Widerstandes R1 zur Summe der Widerstände R1+R2. Die Messspannung Uₘₑₛₛ wird auf einen Operationsverstärker OP oder dergleichen gegeben. Ein solcher Operationsverstärker hat üblicherweise einen so großen Innen-Widerstand, dass der Spannungsteiler bestehend aus R1 und R2 nicht beeinflusst wird. An den Operationsverstärker wird außerdem eine Referenzspannung U_{ref} angelegt, mit der die Messspannung Uₘₑₛₛ verglichen wird. Die erfasste Differenz wird verstärkt und zur Regelung gegeben, so dass die Regelung abhängig von diesem Vergleich zwischen Messspannung Uₘₑₛₛ und Referenzspannung U_{ref} die Pulsbreite der Primärspannung einstellen kann.

Der Spannungsteiler ist fest eingestellt und die Messspannung Uₘₑₛₛ hängt dann nur noch von der auftretenden Ausgangsspannung Dₐ ab.

Figur 2 veranschaulicht die Parallelschaltung dreier Schaltnetzteile NT1, NT2 und NT3. Sämtliche Schaltnetzteile NT1- NT3 geben eine Ausgangsspannung Uₐ' aus bzw. diese Ausgangsspannung liegt jedenfalls an ihrem Ausgang gegenüber der Erde E an. Die ausgegebenen Ströme I₁, I₂ und I₃ addieren sich zu dem Gesamtstrom I_{G}. Der Gesamtstrom I_{G} fließt durch die Last.

Sinkt die Spannung Uₐ' ab, so tut sie dies an jedem Ausgang der Schaltnetzteile NT1-NT3 gleichermaßen. Dasselbe gilt, wenn die Spannung UA' ansteigt. Liegt die Referenzspannung, oberhalb derer das betreffende Schaltnetzteil herunterzuregeln beginnt, beispielsweise bei dem Schaltnetzteil NT1 etwas höher als bei den anderen beiden Schaltnetzteilen NT2 und NT3, so beginnt das Schaltnetzteil NT1 grundsätzlich zuerst mit dem Herunterregeln. Beispielsweise könnte die Referenzspannung bei NT1 bei 23,8 V liegen, wohingegen die anderen beiden Schaltnetzteile beispielsweise eine Referenzspannung von 24,3 V oder 24,5 V aufweisen. Ohne die erfindungsgemäße Ausgestaltung des Schaltnetzteils würde diese geringe Differenz von weniger als einem Volt dazu führen, dass das erste Schaltnetzteil NT1 vollständig herunterregelt und gegebenenfalls abgeschaltet wird. Durch die Verwendung erfindungsgemäßer Schaltnetzteile wird dieser Effekt vermieden.

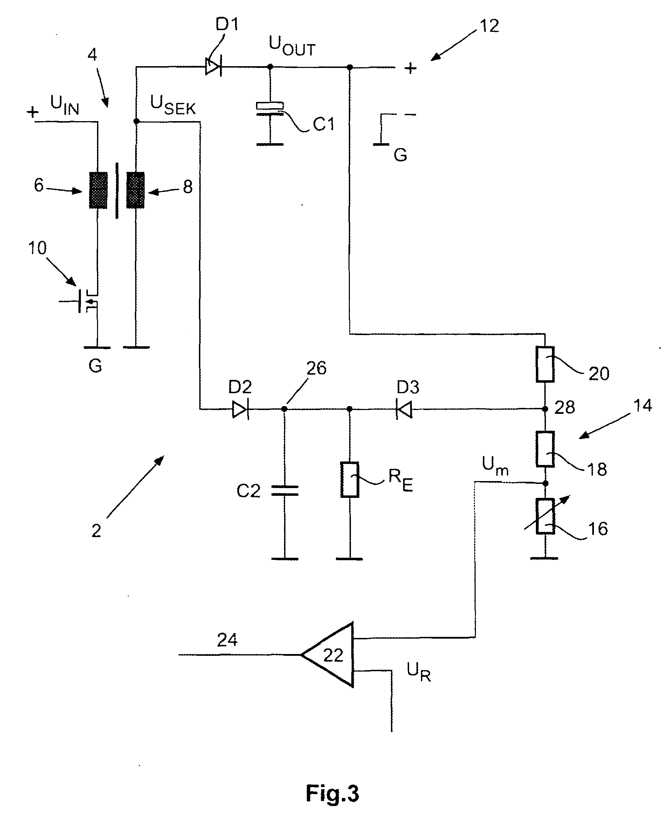

Figur 3 zeigt den Teil eines erfindungsgemäßen Schaltnetzteils 2 als veranschaulichenden Schaltplan. Die Primärseite ist hier nicht ausgeführt, da es auf deren Details nicht ankommt und sie wie sonst aus dem Stand der Technik bekannt ausgeführt werden kann.

Als ein Kernstück weist das Schaltnetzteil 2 einen Übertrager bzw. Wandlertransformator 4 mit einer Primärseite 6 und einer Sekundärseite 8 auf. An der Primärseite 6 wird eine Eingangsspannung U_{IN} gegenüber der Erde G eingegeben. Mit einem Halbleiterschalter 10 kann die Eingangsspannung U_{IN} unterbrochen und damit gepulst werden.

An der Sekundärseite 8 ergibt sich dann eine Sekundärspannung U_{SEK}. Diese Sekundärspannung U_{SEK} wird über die Gleichrichtdiode D1 gleichgerichtet und an dem Glättungskondensator C1 bereitgestellt. An der Klemme 12 kann dann die Ausgangsspannung U_{OUT} abgegriffen werden. Die Spannung U_{OUT} wird außerdem über den Spannungsteiler 14 geführt. Der Spannungsteiler 14 ist aufgebaut aus einem ersten Teilungswiderstand 16, dem zweiten Teilungswiderstand 18 und dem dritten Teilungswiderstand 20. Zwischen dem ersten und zweiten Teilungswiderstand 16 bzw. 18 wird eine Messspannung Um abgegriffen und an einen Auswertblock eingegeben. An dem Auswertblock 22 wird außerdem eine Referenzspannung U_{R} bereitgestellt. Je nach Vergleich der Messspannung Um mit der Referenzspannung U_{R} gibt der Auswertblock 22 ein Regelsignal 24 aus, anhand dessen die Pulsbreite der Eingangsspannung U_{IN} mittels des Halbleiterschalters 10 eingestellt wird.

Anders ausgedrückt erfolgt an der Ausgangswicklung 8 des Wandlertransformators 4 die Gleichrichtung der Wechselspannung U_{SEK} mit einer Diode D1, die hier aus Leistungsdiode ausgeführt ist. Die Pufferung der resultierenden Gleichspannung U_{OUT} erfolgt durch Kondensatoren, für die exemplarisch der Glättungskondensator C1 dargestellt ist. Diese Ausgangsspannung U_{OUT}, die an dem Glättungskondensator C1 anliegt, dient außerdem zur Ansteuerung einer Regeleinrichtung, die die Pulsbreite des Ansteuersignals für den Wandlertrafo 4 steuert.

Wird eine Spannung von Außen an das Schaltnetzteil 2 und damit auch an den bzw. die Kondensatoren C1 angelegt, wirkt diese auch auf die Regelung. Ist diese von Außen angelegte Spannung, die sich dann ebenfalls an dem Kondensator C1 als Ausgangsspannung U_{OUT} einstellt, höher als eine an der internen Regelung eingestellte Spannung, nämlich die durch die Referenzspannung U_{R} eingestellt wird, verringert die Regelung die Pulsbreite so weit, dass die Sekundärspannung U_{SEK} an der Ausgangswicklung bzw. Sekundärseite 8 des Wandlertransformators 4 absinkt.

Durch eine zweite Gleichrichterdiode D2, die ein erstes Hilfsgleichrichtmittel bildet, und die an der Ausgangswicklung 8 des Übertragers bzw. Wandlertransformators 4 angeschlossen ist, wird eine Gleichspannung gewonnen, die als Hilfsspannungspotential an dem Hilfspunkt 26 liegt. Damit liegt diese Hilfsspannung an dem Hilfspunkt 26 an dem Hilfskondensator C2 und damit auch an dem Entladewiderstand RE an. Wird das Schaltnetzteil 2 allein, also im Einzelbetrieb betrieben, so entspricht die Gleichspannung an dem Hilfspunkt 26 etwa der Spannung U_{OUT} an dem Kondensator C1.

Die Spannung an dem Hilfspunkt 26 kann sich aber auch verringern, wenn eine höhere Spannung von einem anderen Netzteil eingespeist wird. Die von außen eingespeiste Spannung, die dann mit der Spannung U_{OUT} an dem Kondensator C1 anliegt, wirkt aufgrund der Sperrwirkung der Diode D1 nicht auf die Spannung an der Sekundärseite 8, nämlich die Spannung U_{SEK}. Die Spannung an dem Hilfspunkt 26 kann somit trotzdem abfallen oder jedenfalls nicht im gleichen Maße mit der von Außen eingespeisten Spannung U_{OUT} ansteigen. Deshalb kann Strom von dem zweiten Anschlusspunkt 28 über die dritte Diode D3, die ein zweites Hilfsgleichrichtmittel bildet, zum Hilfspunkt 26 fließen und die Spannung an dem zweiten Anschlusspunkt 28 reduzieren.

Die Verringerung der Spannung an dem Hilfspunkt 26 macht sich die vorliegende Schaltung zunutze, um die Regeleinrichtung an die höhere Ausgangsspannung anzupassen. Dies geschieht konkret dadurch, dass bei sinkender Spannung an der zweiten Gleichrichterdiode und damit am Hilfspunkt 26 der Spannungsteiler 14 vor dem Auswerteblock 22, der hier als Regelverstärker ausgeführt ist, verändert wird.

Der Wandlertrafo bzw. Übertrager 4 wird dadurch so angesteuert, dass die Ausgangsspannung an die eingespeiste Spannung angeglichen wird. D. h., dass bei einer Spannungseinspeisung von außen das jeweilige Schaltnetzteil nicht abgeschaltet wird und zumindest eine oder mehrere Hilfsspannungen weiterhin vorhanden bleiben. Fällt die eingespeiste Spannung aus oder wird sie geringer, kann hier das Schaltnetzteil sofort eine eigene Ausgangsspannung liefern, ohne dass ein Neustart erfolgen muss.

Die vorgestellte Schaltung verhindert, dass die Pulsbreite des Schaltnetzteils und damit in der Primärseite zu gering wird, um eine Hilfsspannung zu erzeugen. Liegt eine Ausgangsspannung an einem Netzteil an, die höher als die eingestellte Ausgangsspannung ist, wird die intern erzeugte Ausgangsspannung nachgeregelt und an die äußere angeglichen. Dies bedeutet nicht, dass die interne Spannung, insbesondere die Spannung an dem Hilfspunkt 26 der Ausgangsspannung U_{OUT} entspricht, sondern dass die interne Spannung auf einem hohen Wert gehalten wird, der jedoch unter dem Wert der Ausgangsspannung U_{OUT} liegen müsste und das bedeutet insbesondere, dass die interne Spannung nicht vollständig heruntergeregelt und das Schaltnetzteil ausgeschaltet wird.

Der Wandlertrafo wird dabei stets so angesteuert, dass die Pulsbreite ausreicht, um sicher eine oder mehrere Hilfsspannungen zu erzeugen. Eine interne Grundlast ist nicht erforderlich.

## Patentansprüche

1. Schaltnetzteil (2) zum Bereitstellen einer geregelten Ausgangsspannung mit
- einem Wandlertransformator (12) mit
- einer Primärseite (6) zum Eingeben einer Primärspannung und
- einer Sekundärseite (8) zum Ausgeben einer Sekundärspannung,
- einer Regeleinrichtung (22) zum Steuern einer Pulsbreite der Primärspannung mit
- einem Regelungseingang zum Eingeben einer von der Sekundärspannung abhängigen Messspannung (Um) und
- einem Spannungsteiler (14) zum Erzeugern der Messspannung (Um) aus der Ausgangsspannung, wobei
außerdem eine Anpassungsschaltung zum Verändern der Messspannung (Um) vorgesehen ist,
der Spannungsteiler (14)
- einen ersten Teilungswiderstand (16) aufweist, der zwischen dem Regelungseingang und einem Bezugspotential angeschlossen ist,
- einen zweiten Teilungswiderstand (18) aufweist, der zwischen dem Regelungseingang und einem zweiten Anschlusspunkt (28) der Anpassungsschaltung angeschlossen ist, und
- einen dritten Teilungswiderstand (20) aufweist, der zwischen dem zweiten Anschlusspunkt (28) der Anpassungsschaltung und der Ausgangsspannung angeordnet ist,
die Anpassungsschaltung an dem zweiten Anschlusspunkt angeschlossen ist und
einen Hilfspunkt (26) aufweist, zum Bereitstellen eines Hilfspotentials und wobei
die Anpassungsschaltung :
- ein erstes Hilfsgleichrichtmittel (D2) umfasst, das zwischen einem ersten Anschlusspunkt an der Sekundärseite (8) und dem Hilfspunkt (26) angeschlossen ist und in Bezug auf den ersten Anschlusspunkt die gleiche Gleichrichtrichtung aufweist wie ein erstes an dem ersten Anschlusspunkt angeschlossenes Gleichrichtmittel (D1) zum Gleichrichten der Sekundärspannung,
- einen Hilfskondensator (C2) umfasst zum Halten der Hilfsspannung an dem Hilfspunkt (26), der zwischen einem Bezugspotential und dem Hiffspunkt (26) angeschlossen ist,
- einen zum Hilfskondensator (C2) parallel geschalteten Widerstand (RE) umfasst, **dadurch gekennzeichnet,**
**dass** die Anpassungsschaltung
- ein zweites Hilfsgleichrichtmittel (D3) umfasst, das zwischen dem zweiten Anschlusspunkt (28) und dem Hilfspunkt (26) angeschlossen ist und in Bezug auf den Hilfspunkt die gleiche Gleichrichtrichtung aufweist wie das erste Hilfsgleichrichtmittel (D2).

2. Spannungsquelle zum Bereitstellen einer geregelten Ausgangsspannung, mit wenigstens zwei Schaltnetzteilen (2) nach einem der vorstehenden Ansprüche.

3. Spannungsquelle nach Anspruch 2, **dadurch gekennzeichnet, dass** die Schaltnetzteile (2) parallel geschaltet sind, so dass sich ihre Ausgangsströme addieren.

4. Spannungsquelle nach Anspruch 3, **dadurch gekennzeichnet, dass** die Schaltnetzteile (2) dazu vorbereitet sind, jeweils etwa den gleichen Strom zu liefern.

5. Verfahren zum Betreiben eines Schaltnetzteils (2) zum Bereitstellen einer geregelten Ausgangsspannung, umfassend die Verfahrensschritte:
- Ansteuern eines Wandlertransformators (4) des Schaltnetzteils (2) mit einer gepulsten Primärspannung an einer Primärseite (6), so dass an einer Sekundärseite (8) des Wandlertransformators (4) eine Sekundärspannung ausgegeben wird,
- Gleichrichten der Sekundärspannung, um eine Ausgangsspannung zu erzeugen, und
- Einstellen einer Pulsbreite der Primärspannung mittels einer Regeleinrichtung zum Steuern der Ausgangsspannung, **dadurch gekennzeichnet, dass**
- die Pulsbreite abhängig von der Ausgangsspannung und der Sekundärspannung eingestellt wird und
ein Schaltnetzteil (2) nach Anspruch 1 verwendet wird.

6. Verfahren zum Betreiben einer Spannungsquelle, wobei
- mehrere Schaltnetzteile (2) parallel geschaltet werden und
- jedes Schaltnetzteil (2) nach Anspruch 5 betrieben wird.

7. Verfahren nach Anspruch 6, **dadurch gekennzeichnet, dass** eine Spannungsquelle nach einem der Ansprüche 2 bis 4 verwendet wird.

## Claims

1. Switching power supply (2) for providing a regulated output voltage having
- a converter transformer (12) having
- a primary side (6) for inputting a primary voltage and
- a secondary side (8) for outputting a secondary voltage,
- a regulating device (22) for controlling a pulse width of the primary voltage having
- a regulation input for inputting a measurement voltage (Um) depending on the secondary voltage, and
- a voltage divider (14) for producing the measurement voltage (Um) from the output voltage,
in addition a matching circuit for changing the measurement voltage (Um) being provided,
the voltage divider (14) having
- a first dividing resistor (16), which is connected between the regulation input and a reference potential,
- a second dividing resistor (18), which is connected between the regulation input and a second connecting point (28) of the matching circuit, and
- a third dividing resistor (20), which is arranged between the second connecting point (28) of the matching circuit and the output voltage,
the matching circuit being connected to the second connecting point and having
an auxiliary point (26) for providing an auxiliary potential and
the matching circuit comprising:
- a first auxiliary rectifying means (D2), mulch is connected between a first connecting point on the secondary side (B) and the auxiliary point (26) and has, in relation to the first connecting point, the same rectifying direction as a first rectifying means (D1), connected to the first connecting point, for rectifying the secondary voltage,
- an auxiliary capacitor (C2) for maintaining the auxiliary voltage at the auxiliary point (26), which is connected between a preference potential and the auxiliary point (26),
- a resistor (RE) connected in parallel with the auxiliary capacitor (C2),
**characterised in that** the matching circuit comprises
- a second auxiliary rectifying means (D3), which is connected between the second connecting point (28) and tube auxiliary point (26) and has, in reflation to the auxiliary point, the same rectifying direction as the first auxiliary rectifying means (D2).

2. voltage source for providing a regulated output voltage, having at least two switching power supplies (2) according to one of the preceding claims.

3. Voltage source according to Claim 2, **characterised in that** the switching power supplies (2) are connected in parallel, so that their output currents are added.

4. Voltage source according to Claim 3, **characterised in that** the switching power supplies (2) are prepared so as to supply in each case approximately the same current.

5. Method for operating a switching power supply (2) for providing a regulated output voltage, comprising the method steps:
- driving a converter transformed (4) of the switching power supply (2) with a pulsed primary voltage on a primary side (6), so that a secondary voltage is outputted on a secondary side (8) of the converter transformer (4),
- rectifying the secondary voltage, in order to produce an output voltage, and
- setting a pulse width of the primary voltage by means of a regulating device for controlling the output voltage, **characterised in that**
- the pulse width is set depending on the output voltage and the secondary voltage, and
a switching power supply (2) according to Claim 1 is used.

6. Method for operating a voltage source,
- a plurality of switching power supplies (2) being connected in parallel and
- each switching power supply (2) being operated according to Claim 5.

7. Method according to Claim 6, **characterised in that** a voltage source according to one of Claim 2 to 4 is used.

## Revendications

1. Ploc d'alimentation à découpage (2) pour fournir une tension de sortie régulée comportant :
- un groupe convertisseur transformateur (12) doté
-- d'un côté primaire (6) pour introduire une tension primaire et
-- d'un côté secondaire (8) pour distribuer une tension secondaire,
- un dispositif de régulation (22) pour commander une durée d'impulsion de la tension primaire doté
-- d'une entrée de régulation servant introduire une tension de mesure (Um) dépendant de la tension secondaire et
-- d'un diviseur de tension (14) servant à générer la tension de mesure (Um) à partir de la tension de sortie, dans lequel
en outre un circuit d'adaptation servant à modifier la tension de mesure (Um) est prévu
et le diviseur de tension (14)
- présente une première résistance partielle (16), qui est raccordée entre l'entrée de régulation et un potentiel de référence,
- présente une deuxième résistance partielle (18), qui est raccordée entre l'entrée de régulation et un deuxième point de raccordement (28) du circuit d'adaptation, et
- présente une troisième résistance partielle (20), qui est raccordée entre le deuxième point de raccordement (28) du circuit d'adaptation et la tension de sortie,
le circuit d'adaptation étant raccordé au deuxième point de raccordement et
présentant un point auxiliaire (26) servant à fournir un potentiel auxiliaire, et dans lequel le circuit d'adaptation :
- comporte un premier moyen redresseur auxiliaire (D2) qui est raccordé entre un premier point de raccordement au niveau du côté secondaire (8) et le point auxiliaire (26) et qui présente par rapport au premier point de raccordement la même direction de redressement qu'un premier moyen redresseur (D1) raccordé au premier point de raccordement servant à redresser la tension secondaire,
- comporte un condensateur auxiliaire (C2) pour maintenir la tension auxiliaire au niveau du point auxiliaire (26) qui est raccordé entre un potentiel de référence et le point auxiliaire (26),
- comporte une résistance (RE) branchée de manière parallèle par rapport au condensateur auxiliaire (C2), **caractérisé en ce que** le circuit d'adaptation
- comporte un deuxième moyen redresseur auxiliaire (D3) qui est raccordé entre le deuxième point de raccordement (28) et le point auxiliaire (26) et qui présente, par rapport au point auxiliaire, la même direction de redressement que le premier moyen redresseur auxiliaire (D2).

2. Source de tension pour fournir une tension de sortie régulée, comportant au moins deux blocs d'alimentation découpage (2) selon la revendication précédente.

3. Source de tension selon la revendication 2, **caractérisée en ce que** les blocs d'alimentation à découpage (2) sont branchés en parallèle de sorte que leurs courants de sortie s'additionnent.

4. Source de tension selon la revendication 3, **caractérisée en ce que** les blocs d'alimentation à découpage (2) sont préalablement préparés pour fournir à peu près respectivement le même courant.

5. Procédé servant à faire fonctionner un bloc d'alimentation à découpage (2) pour fournir une tension de sortie régulée, comprenant les étapes de procédé consistant à :
- commander un groupe convertisseur transformateur (4) du bloc d'alimentation à découpage (2) avec une tension primaire pulsée au niveau d'un côté primaire (6) de sorte qu'une tension secondaire soit émise au niveau d'un côté secondaire (8) du groupe convertisseur transformateur (4),
- redresser la tension secondaire afin de générer une tension de sortie, et
- ajuster une durée d'impulsion de la tension primaire au moyen d'un dispositif de régulation servant à commander la tension de sortie, **caractérisé en ce que**
- la durée d'impulsion est ajustée en fonction de la tension de sortie et de la tension secondaire, et **en ce**
**qu'**on utilise un bloc d'alimentation à découpage (2) selon la revendication 1.

6. Procédé pour faire fonctionner une source de tension, dans lequel
- plusieurs blocs d'alimentation à découpage (2) sont branchés en parallèle et
- chaque circuit de commande d'alimentation à découpage (2) fonctionne selon la revendication 5.

7. Procédé selon la revendication 6, **caractérisé en ce qu'**on utilise une source de tension selon l'une des revendications 2 à 4.
